# EUROPEAN PATENT APPLICATION

(11) **EP 2 860 698 A1**
(43) Date of publication of application: **15.04.2015**
(21) Application number: 13187697.1
(22) Date of filing: 08.10.2013
(51) Int. Cl.: G06T 13/80

(54) **Including external image content into a cinemagraph**

(71) Applicant: Nokia Technologies OY, 02610 Espoo (FI)
(72) Inventor: Laaksonen, Lasse Juhani, 37120 Nokia (FI); Lehtiniemi, Arto Juhani, 33880 Lempäälä (FI); Tammi, Mikko Tapio, 33310 Tampere (FI); Vilermo, Miikka, Tapani, 37200 Siuro (FI)
(74) Representative: Cohausz & Florack

(57) **Abstract**

It is inter alia disclosed to create a cinemagraph from an image sequence. Therein, creating the cinemagraph comprises including external image content associated with a motion pattern, the motion pattern corresponding to a motion pattern associated with a first object in the image sequence, into the cinemagraph.

## Description

### FIELD OF THE DISCLOSURE

The invention relates to the field of cinemagraphs and more specifically to the creation of a cinemagraph.

### BACKGROUND

Cinemagraphs are image sequences that combine still and video image elements. They provide the illusion that a viewer is watching a still image that contains some movement or alternatively a video that contains many static elements. The selection of the moving and static elements is typically made such that the cinemagraph provides a surprise for the viewer or that it enhances the mood of the images. Cinemagraphs are well suited for creating short motion sequences to make the still images more life-like and interesting or to draw the attention of the viewer to a certain aspect of the image.

Cinemagraphs can be created manually based on a sequence of captured pictures using a dedicated application. The sequence of pictures can be either a sequence of photographs or a sequence of images represented by video frames. Cinemagraphs can also be created automatically.

For creating a cinemagraph, desired moving elements may be selected from the sequence of pictures. One of the pictures may be selected for the still parts of the cinemagraph, and the moving elements may be filtered out from this picture. The animation for these elements may be created based on a plurality of the pictures. The animation can be provided as a sequence of frames that is repeated in a loop. The plurality of the pictures that form the basis for the animation may be selected for example such that the result appears as a seamless loop of a movement.

### SUMMARY OF SOME EXAMPLE EMBODIMENTS OF THE INVENTION

According to some example embodiments of the invention, a method performed by an apparatus, is disclosed. The method comprises creating a cinemagraph from an image sequence. Therein, creating the cinemagraph comprises including external image content associated with a motion pattern, the motion pattern corresponding to a motion pattern associated with a first object in the image sequence, into the cinemagraph.

Further a first apparatus is disclosed, which is configured to realize or comprises respective means for realizing the actions of the method according to the invention (and any of its embodiments described herein). The means of this apparatus can be implemented in hardware and/or software. They may comprise for instance a processor, e.g. for executing computer program code for realizing the required functions, a memory storing the program code, or both. Alternatively, they could comprise for instance circuitry that is designed to realize the required functions, for instance implemented in a chipset or a chip, like an integrated circuit.

Further a second apparatus is disclosed, which comprises at least one processor and at least one memory including computer program code, the at least one memory and the computer program code configured to, with the at least one processor, cause an apparatus at least to perform the actions of the method according to invention (and any of its embodiments described herein). Thus, the at least one memory and the computer program code are configured to, with the at least one processor, cause an apparatus to create a cinemagraph from an image sequence. Therein, creating the cinemagraph comprises including external image content associated with a motion pattern, the motion pattern corresponding to a motion pattern associated with a first object in the image sequence, into the cinemagraph. The apparatus may comprise only the indicated components or one or more additional components. It may be a module or a component for a device, for example a chip. Alternatively, it may be a device, for instance a server or a mobile terminal. Any of the described apparatuses may for instance at least comprise a user interface, a communication interface and/or an antenna.

Further a non-transitory (e.g. tangible) computer readable storage medium is described, in which computer program code is stored, which causes an apparatus to realize the actions of the method according to the invention (and any of its embodiments described herein) when executed by a processor. The computer readable storage medium could for example be a disk or a memory or the like. The computer program code could be stored in the computer readable storage medium in the form of instructions encoding the computer-readable storage medium. The computer readable storage medium may be intended for taking part in the operation of a device, like an internal or external hard disk of a computer, or be intended for distribution of the program code, like an optical disc.

Also the computer program code by itself may be considered an embodiment of the invention.

Any of the described apparatuses may comprise only the indicated components or one or more additional components. Any of the described apparatuses may be a module or a component for a device, for example a chip. Alternatively, any of the described apparatuses may be a device, for instance a server or a mobile terminal, or form part thereof. Examples of such mobile terminals include mobile phones, personal digital assistants (PDAs), mobile computers, e.g. laptops, notebooks or tablet computers, digital music players etc. Any of the described apparatuses may for instance at least comprise a user interface, a communication interface and/or an antenna.

In the following, some explanations of example embodiments of the invention are given. For reasons of conciseness, focus is put on the method according to the invention. The given explanations however correspondingly apply to the first apparatus, the second apparatus, the non-transitory computer readable storage medium and the computer program code according to the invention.

The embodiments of the invention presented in this section are mere examples and are thus non-limiting.

A method performed by an apparatus, the method comprising creating a cinemagraph from an image sequence, wherein creating the cinemagraph comprises including external image content associated with a motion pattern, the motion pattern corresponding to a motion pattern associated with a first object in the image sequence, into the cinemagraph.

Due to the included external image content being associated with a motion pattern, the motion pattern corresponding to a motion pattern associated with a first object in the image sequence, the included external image content may be expected to match well with the image content of the image sequence at least in some cases, e.g. to exhibit a comprehensible interrelation as regards content at least for some users. By including the external image content into the cinemagraph, a mashup of (at least parts of) the image sequence and the external image content, e.g. a mixture of (at least parts of) the image sequence and the external image content,may be created. As the motion pattern correspondence is the basis for deciding which external image content to include, the external image content may be chosen at least semi-automatically. Available user interfaces, such as graphical user interfaces (GUIs), serving for the creation of cinemagraphs, e.g. a user interface of a software application for creating cinemagraphs, may therefore remain unchanged in many aspects and still make the capabilities of cinemagraph augmentation according to embodiments of the present invention accessible.

The obtained cinemagraph may then be presented to a user, stored and/or distributed, e.g. by sending it via e-mail, using it as a user logo, e.g. for an Internet forum, or uploading it to an Internet video portal.

The image sequence from which the cinemagraph is created may for instance be a sequence of still images, e.g. photographs. As another example, the image sequence may also be a sequence of image frames from a video. The image frames may for instance be consecutive image frames of the video. The image sequence from which the cinemagraph including the external image content is created may itself also be a cinemagraph. Thus, a new cinemagraph may be created from an already available cinemagraph.

A variety of apparatuses may be used for acquiring the image sequence from which the cinemagraph is created. For instance, a dedicated still image camera device or a dedicated video camera device may be employed for this purpose. Alternatively, a mobile device equipped with a camera, such as a mobile phone (e.g. a smartphone), a tablet computer or a laptop computer, may be used. Another example of an apparatus suitable for acquiring the image sequence, the apparatus may also be a webcam of a desktop computer.

The image sequence comprises a first object. In other words, a first object may be present, e.g. visible, in the image sequence. In an example embodiment, the first object may be present in at least two images, for instance still images or video frames, of the image sequence so that a motion pattern associated with the first object may be derived therefrom. The first object may be a physical object, e.g. a person (the term object is to comprise subjects in this specification), an animal, a car, a plane, a ball etc. or parts thereof. However, for the image sequence to comprise the first object, the first object does not have to be visible in its entirety in the image sequence. It may suffice if the first object is partially visible in the image sequence. Partial visibility may be sufficient for deriving a motion pattern associated with the first object from the image sequence.

The motion pattern associated with the first object may also be referred to as a first motion pattern. The motion pattern associated with the first object may for instance be a motion pattern describing a rigid motion. A rigid motion may in an example embodiment comprise motion that does substantially not cause deformation of the first object. The rigid motion may for instance comprise a translation or a rotation of the first object in the image sequence. The motion pattern may for instance comprise information on the position and/or orientation of the first object in a plurality of images of the image sequence, thus comprising information on how the position and/or orientation of the first object evolve temporally. The position and/or orientation information may be embodied as position and/or orientation change information, e.g. describing how the position and/or orientation of the first object changes from one image of the image sequence to another image of the image sequence. Absolute position and/or orientation information regarding the first object may for instance only be provided for one image of the image sequence that shows the first object. This image may thus serve as a reference image in the sense that the position and/or orientation of the first object in another image of the image sequence may be determined based on the absolute position and/or orientation information provided for the reference image and the position and/or orientation change information. As already mentioned above, absolute position and/or orientation information regarding the first object may however also be provided for more than one image.

The motion pattern associated with the first object may however also describe a non-rigid motion. A non-rigid motion may in an example embodiment comprise motion that causes deformation of the first object. The non-rigid motion may for instance comprise a change of size or shape of the first object in the image sequence. The motion pattern associated with the first object may also at the same time comprise both rigid motion and non-rigid motion.

In some embodiments, the motion pattern may further be interpolated between at least a first image of the image sequence and a second image of the image sequence such that it may become possible to insert at least one additional image to the image sequence between the at least a first image and a second image of the image sequence.

According to an example embodiment, creating the cinemagraph further comprises extracting a motion pattern associated with the first object in the image sequence.

According to an example embodiment, creating the cinemagraph further comprises segmenting an image of the image sequence, thereby obtaining an image segment, and performing motion detection on the image segment. Therein, the motion detection may serve merely for detecting if there is any motion at all in the respective segment. Thus, a motion pattern is not obtained at this stage. However, according to another approach, motion pattern extraction of a motion pattern associated with the respective segment may also be performed. Therefore, for instance, a more complex algorithm may be employed if necessary.

According to an example embodiment, a plurality of image segments may be obtained by segmenting an image of the image sequence. According to the result of a performed motion detection, motion may be present in more than one of these image segments. An image segment of the plurality of image segments in which motion is present may be selected, e.g. by a user. The first object may be present in the selected segment. In this context, it may be detected whether there is any motion at all in the respective segments and then, after a segment comprising motion has been selected, the motion pattern associated with the first object comprised by said segment may be extracted. By first detecting whether motion exists at all in an image segment, the potentially higher computational effort of motion pattern extraction may be avoided for image segments not comprising any motion at all. However, motion pattern extraction may also be performed directly, e.g. for selected, some or all image segments.

The extracted motion pattern may be described according to a suitable motion pattern representation. For instance, a trajectory for each joint/selected joints of a human or animal body may serve as a motion pattern representation suitable in case of the first object being a human/animal. As a further example of such a motion pattern representation, the motion pattern may be described in terms of a trajectory of a single point of the first object, e.g. its centroid. However, this may be a rather coarse motion pattern representation.

The motion pattern associated with the selected segment and thus with the first object may be used for external image content retrieval.

A motion pattern corresponding to the motion pattern associated with the first object may for instance be a motion pattern that reaches at least a predetermined level of similarity to the motion pattern associated with the first object. The similarity between the motion patterns may for instance be determined based on a similarity measure/distance measure. For motion patterns being considered as corresponding to each other, it may then be demanded that the similarity measure assumes at least a predetermined value/the distance measure does not exceed a predetermined value. Motion patterns may still be considered similar if they are not identical. For instance a motion pattern may be the reflection of another motion pattern. These motion patterns may still be considered as similar and thus corresponding.

As an example of similar but not identical motion patterns, a motion pattern describing a motion from a point A to a point B along a first line may be considered similar to a motion pattern describing a motion from a point C to a point D along a second line parallel to the first line. As another example, one motion pattern may be a spatially scaled version of the other motion pattern such that the distance between the points A and B is not identical to the distance between the points C and D. The motion patterns may also be temporally scaled with respect to each other. For instance, the linear motion from point A to point B may be faster than the linear motion form point C to point D.

It may also suffice for considering motion patterns to correspond if the correspondence of the motion patterns is partial. For instance, the first motion pattern described above may describe a linear motion from point A to point B and then along another line to a point B', thus being composed of two linear motion. The other motion pattern describing the linear motion from point C to point D is composed of only one linear motion. As the part of the first motion pattern describing the linear motion from point A to point B may be considered to correspond to the linear motion from point C to point D described by the second motion pattern, the first and the second motion pattern may be considered to correspond partially.

As examples of determining if motion patterns correspond, dynamic time warping (DTW) or in case of the first object being a human or an animal, joint orientations and velocities (or accelerations) may be employed. Also, other suitable methods for calculating the similarity/dissimilarity of motion patterns may be employed.

The external image content may comprise video image content and/or still image content and/or cinemagraph content. It may have been captured by a user of an example of an embodiment of an apparatus performing the method according to at least one example embodiment of the invention or it may have been captured and/or provided from other parties.

The external image content may comprise advertising image content so that the cinemagraph is augmented with information on products and/or services.

In an example embodiment, due to the image content being external, the image content is not part of the image sequence comprising the first object but is obtained from another source.

According to an example embodiment of the present invention, the external image content is also associated with a motion pattern. This motion pattern may be referred to as a second motion pattern. The explanations regarding the motion pattern associated with the first object (first motion pattern) given above apply accordingly to the motion pattern associated with the external image content (second motion pattern). For example, the motion pattern associated with the external content may describe a rigid motion or a non-rigid motion. In an example embodiment, the motion pattern associated with the external content may be pre-extracted.

In an example embodiment, the association of the external image content with the respective (second) motion pattern shows itself in that at least parts of the external image content perform the motion described by the associated motion pattern. However, the external image content may also be static, e.g. still, image content and may nevertheless be associated with a motion pattern. It may for instance be stored together with the respective motion pattern or otherwise linked thereto, for instance because of a thematic connection between the static external image content and a motion described by the associated motion pattern.

According to an example embodiment, the method comprises obtaining the external image content. This is then of course performed before the inclusion of the external image content into the cinemagraph. Obtaining the external image content may for instance comprise or correspond to receiving the external image content at an example of an embodiment of an apparatus performing the method according to at least one example embodiment of the present invention or loading the external image content, e.g. from a storage device forming part of or being operatively connected to said apparatus. Obtaining the external image content may also comprise obtaining a plurality of external image content elements, extracting the associated motion patterns therefrom and then determining which (second) motion pattern corresponds to the (first) motion pattern associated with the first object of the image sequence. Alternatively, initially only the second motion pattern may be obtained. In this context, only for a second motion pattern for which it has been established that it corresponds to the first motion pattern the associated external image content may be obtained subsequently.

The image content may be automatically obtained, for example, without user input or without a user having to browse through external image content manually. In some situations, this may be convenient for a user.

According to an example embodiment, the external image content is obtained by means of a database.

As an example, the external image content itself may be stored in the database. As another example, the (second) motion pattern associated with the respective external image content may be stored in the database together with a indication where the external image content itself may be found, e.g. together with a link to the external image content. The indication may for instance point to a video platform in the Internet or to a storage location on a mass storage device, e.g. a flash memory or a hard disk.

Obtaining the external image content by means of the database may comprise:
- passing the motion pattern associated with the first object to an apparatus hosting the database (such as a server);
- comparing the motion pattern associated with the first object with motion patterns stored in the database or derived from image content stored in the database, e.g. at the apparatus hosting the database or at the originating apparatus that passed the motion pattern associated with the first object to the apparatus hosting the database (if the motion pattern stored in the database has been provided to the originating apparatus);
- retrieving image content associated with a motion pattern corresponding to the motion pattern associated with the first object; and
- providing the external, in this example retrieved, image content to an example of an embodiment of an apparatus performing the method according to at least one example embodiment of the present invention.

In this context, automatically obtaining the external image content may comprise automatically performing the above mentioned actions. For instance, automatically obtaining the external image content may have been initiated by a user command to do so, e.g. by selecting the first object or an image segment in which the first object is present.

The database may for instance be provided on the same apparatus that performs the example embodiment of a method according to the present invention. Alternatively, the database may be hosted by another apparatus. The database may for instance be hosted by a server. It may also be distributed over a plurality of servers. An example embodiment of an apparatus performing an example embodiment of a method according to the invention may comprise means for establishing a connection, e.g. a circuit-switched or a packet-switched connection, to the server/servers. The apparatus may thus be enabled to provide the (first) motion pattern associated with the first object to a respective server for querying the database in order to obtain external image content associated with a corresponding (second) motion pattern. The apparatus may then also receive the external image content from the server via the connection. It may for instance be chosen to provide the database at an external device, e.g. a server, if the apparatus that performs the actions of the presently discussed method has only limited storage capacities and/or processing capacities and/or battery capacity. This may for instance be the case if the apparatus is a mobile device.

The (second) motion pattern associated with the external image content may be derived upon request. For example, it may be derived if a request for obtaining external image content associated with a (second) motion pattern corresponding to that associated with the first object (first motion pattern) is received. This may for instance comprise performing motion pattern extraction on the external image content. Alternatively, motion patterns may have been precalculated and stored. This may allow for quicker retrieval of external image content associated with a corresponding motion pattern.

It should be noted that a large variety of methods for motion pattern correspondence determination (e.g. DTW, joint orientations and velocities/accelerations) and for the retrieval of associated image content from a database, for instance comprising indexing of the database, e.g. according to the generalized multimedia indexing framework (GEMINI) proposed by Falout-sos et al., may be employed. Further information on these issues and also on motion extraction and motion representation - including specialized methods adapted to human motion patterns - may for instance be found in the following publications, all of which are incorporated herein by reference: K. Y. Wong et al. "Motion segmentation and indexing for video database", Vision Interface '99, Trois-Rivières, Canada, 19-21 May, 1999; M. Kapadia et al. "Efficient motion retrieval in large motion databases", ACM SIGGRAPH Symposium on Interactive 3D Graphics and Games, March 2013; B. Krüger et al., "Fast local and global similarity searches in large motion capture databases", Eurographics/ ACM SIGGRAPH Symposium on Computer Animation, 2010;Y. Lin, "Efficient motion search in large motion capture databases", ISVC'06 Proceedings of the Second international conference on Advances in Visual Computing.

According to an example embodiment, the included external image content is at least partially visible in the cinemagraph. The partial visibility of the external image content may comprise partial spatial and/or partial temporal visibility. For instance, one or more parts of the external image content may be visible in an image (frame) forming part of the cinemagraph. Including the external image content in the cinemagraph may comprise modifying the image content before it is included into the cinemagraph.

The external image content may be included into the cinemagraph as moving image content. This may comprise including the image content into more than one image frame of the cinemagraph and perform a rigid or non-rigid motion from one image to another image of the cinemagraph.

According to an example embodiment, the external image content comprises a second object moving according to the motion pattern associated with the external image content. Thus, the (second) motion pattern associated with the external image content is associated with the second object.

According to this embodiment, the cinemagraph may be augmented with a moving object such as the second object. Since the second object moves according to the (second) motion pattern associated with the external image content and since this motion pattern corresponds to the (first) motion pattern associated with the first object, the cinemagraph is augmented with a second object performing a movement similar to the movement of the first object. A user watching/looking at the cinemagraph may in some cases notice the corresponding motion patterns of the first object and the second object, which may at least in some case create an interesting and surprising user experience.

According to an example embodiment, creating the cinemagraph further comprises adapting the second object to the first object.

Adapting the second object to the first object may for instance comprise scaling the second object so that it at least approximately assumes the size of the first object. Alternatively or additionally, the adaption may comprise rotating the second object, for instance so that the second object has the same orientation as the first object. To name but one other example of an operation that may be performed to the second object for adapting it to the first object, the colour(s) and/or texture of the second object may be changed so that it resembles that of the first object.

According to an example embodiment, adapting the second object to the first object comprises adapting the (second) motion pattern associated with the external image content (and thus with the second object) to the (first) motion pattern associated with the first object. This may for instance comprise compensation of a spatial and/or temporal scaling of the (second) motion pattern associated with the external image content. Scaling of said motion pattern may correspond to scaling the motion described by this motion pattern. If the (second) motion pattern associated with the external image content - or at least parts of it - is a spatially and/or temporally scaled version of the (first) motion pattern associated with the first object, compensation of the spatial and/or temporal scaling may be achieved by applying the corresponding inverse spatial and/or temporal scaling.

According to an example embodiment, adapting the second object to the first object may be performed before the external image content is included into the cinemagraph.

By adapting the second object to the first object, it may be attained that the second object matches well to the first object. This may for instance comprise that at least some users would not notice substantial differences between the first object and the second object as regards the aspect or aspects in which the second object has been adapted to the first object, e.g. size and/or orientation and/or texture. The adaption may thus at least in some cases have the effect that a user watching/looking at the cinemagraph cannot tell at the first glance that the first object did not form part of the image sequence from which the cinemagraph has been created but has been external image content.

According to an example embodiment, including the external image content into the cinemagraph comprises adding the second object to the cinemagraph while maintaining the first object.

According to this embodiment, both the first object and the second object will be present in the cinemagraph. The first object may be unaltered by the addition of the second object. However, in some cases adding the second object to the cinemagraph may have the effect that the first object becomes occluded from time to time by the second object.

According to an example embodiment, including the external image content into the cinemagraph comprises replacing the first object with the second object.

According to this embodiment, the first object will not be present in the cinemagraph. Instead of the first object, the second object will be visible. This embodiment may at least in some cases be enjoyable for users, if the second object has previously been adapted to the first object so that the user may potentially not notice at the first glance that the first object has been replaced with the second object.

According to an example embodiment, including the external image content into the cinemagraph comprises merging the first object and the second object.

Merging the first object and the second object may at least in some case create a surprising effect and thus an interesting user experience for a user watching/looking at the cinemagraph.

Merging the first object and the second object may comprise combining image information pertaining to the first object with image information pertaining to the second object so that both the first object and the second object are partially present in the cinemagraph.

An example approach to merging the first object and the second object may comprise that parts of the first object are not present in the cinemagraph and the visual information pertaining to the second object taken from the external image content is also included only partially into the cinemagraph so that parts of the second object are also not present in the cinemagraph. For instance, a first area of the surface of the first object may be visible in the cinemagraph and a second area may have been replaced by a part of the surface of the second object. In this context, a user may select which part(s) of the first object should be maintained in the cinemagraph and which part(s) of the first object should be replaced with a part/parts of the second object.

According to an example embodiment, merging the first object and the second object may comprise superimposing a faded version of the first object (or parts thereof) and a faded version of the second object (or parts thereof).

The merged first and second objects may stay together during the motion they perform in the cinemagraph due to the correspondence of their associated motion patterns.

According to an example embodiment, including the external image content into the cinemagraph comprises at least partially morphing the first object into the second object.

At least partially morphing the first object into the second object may yield the cinemagraph comprising an image frame that shows the first object but not the second object. In a subsequent image frame, a faded version of at least a part of the second object and a faded version of a corresponding part of the second object may be superimposed. At least partially morphing the first object into the second object may thus be considered to comprise merging the first object and the second object. In an even later image frame of the cinemagraph, an unfaded version of the respective part of the second object may be present while the corresponding part of the first object is not present anymore.

Morphing the first object into the second object may at least in some cases create a surprising effect and thus an interesting user experience for a user watching/looking at the cinemagraph.

According to an example embodiment of, the (first) motion pattern associated with the first object and the (second) motion pattern associated with the second object correspond only partially and the second object is only included into the cinemagraph as long as there is a correspondence of the motion patterns. Thus, the integration of the second object into the cinemagraph may at least in some cases appear harmonious to a user watching/ looking at the created cinemagraph.

To give an example of the presently discussed embodiment, the (first) motion pattern associated with the first object may for instance describe a linear motion from a point A to a point B along a first line. The (second) motion pattern associated with the second object may describe a motion from a point C to a point D along a second line parallel to the first line (first motion) and then a motion from point D to point D' along another path (second motion). While there is a correspondence between the first motion of the (second) motion pattern associated with the second object and the (first) motion pattern associated with the first object, there may be no correspondence between the second motion of the (second) motion pattern associated with the second object and the (first) motion pattern associated with the first object. Thus, the motion patterns correspond only partially.

The partial correspondence of the motion patterns may thus be a correspondence of at least one motion described by the (first) motion pattern associated with the first object and at least one motion described by the (second) motion pattern associated with the external image content (and thus with the second object).Therein, one or both of the (first) motion pattern associated with the first object or the (second) motion pattern associated with the external image content (and thus with the second object) may describe more than one motion.

In the context of the above example, including the second object into the cinemagraph only as long as there is a correspondence of the motion patterns may comprise only including the presentation of the second object in image frames of the external image content that show the second object moving from point C to point D into the cinemagraph. In this example, the presentation of the second object in image frames that show the second object moving from point D to point D' is not included.

In other words, including the second object into the cinemagraph only as long as the motion patterns correspond may also be described as including the second object into the cinemagraph being limited to presentations of the second object moving according to the corresponding parts of the motion patterns.

According to an example embodiment, the (first) motion pattern associated with the first object and the (second) motion pattern associated with the second object correspond only partially and including the second object into the cinemagraph extends beyond a correspondence of the motion patterns.

Since including the second object into the cinemagraph extends beyond the correspondence of the only partially corresponding motion patterns, the created cinemagraph may at least in some cases provide a interesting user experience.

In the context of the example described above, including the second object into the cinemagraph beyond a correspondence of the motion patterns may then comprise that not only the presentation of the second object in image frames of the external image content that show the second object moving from point C to point D are included into the cinemagraph but also presentations in image frames that show the second object moving from point D to point D'.

According to an example embodiment, it may be selectable by a user whether
- including the external image content into the cinemagraph should comprise adding the second object to the cinemagraph while maintaining the first object; or
- including the external image content into the cinemagraph should comprise replacing the first object with the second object; or
- including the external image content into the cinemagraph should comprise merging the first object and the second object; or
- including the external image content into the cinemagraph should comprise at least partially morphing the first object into the second object.

Likewise it may be selectable by a user whether creating the cinemagraph should comprise adapting the second object to the first object.

It may also be selectable by a user if - in case of the (first) motion pattern associated with the first object and the (second) motion pattern associated with the second object corresponding only partially - the second object is only included into the cinemagraph as long as there is a correspondence of the motion patterns or if including the second object into the cinemagraph extends beyond a correspondence of the motion patterns.

The above user selections may be received by an example embodiment of an apparatus performing an example embodiment of the method according to the invention.

According to an example embodiment, the above selections are not performed by a user, e.g. manually, but automatically.

It is also possible that with respect to the above options, user selections and automatic selections are mixed.

According to an example embodiment, the external image content comprises static image content and the static image content is included into the cinemagraph.

Thus, static image content, e.g. still image content, comprised by the external image content but nevertheless associated with a (second) motion pattern corresponding to that associated with the first object is incorporated into the cinemagraph. This may at least in some cases create an interesting user experience for a user watching/looking at the cinemagraph.

According to an example embodiment, the static image content is included into the cinemagraph as background.

According to an example embodiment, the external image content comprises a second object moving according to the (second) motion pattern associated with the external image content and the static image content is the background against which the second object moves in the external image content. Also in the context of this embodiment, the static image content may be included into the cinemagraph as background.

The correspondence of the motion patterns may be considered as an indicator indicating that the background present in the external image content is thematically linked to the first object (and its movement). It may thus be well-fitting as regards content, e.g. exhibit a comprehensible interrelation as regards content at least for some users, to augment the cinemagraph with the background of the external image content, in this example the static image content of the external image content. It may be well-fitting to include said background into the cinemagraph as background.

To illustrate such an embodiment, consider the following example: The image sequence from which the cinemagraph is created shows a running first person (first object). External image content, e.g. also a video, a still image sequence or the like, may show a second person (second object) running with a similar motion pattern, e.g. along a similar trajectory. The external image content may be obtained, e.g. from a database, based on the correspondence of the motion patterns. The second person may for instance be an athlete running in a stadium (static image content) that forms the background against which the athlete (second object) moves. The stadium (static image content) may be included into the cinemagraph as background, for instance by selecting one still image of the video/still image sequence or the like forming the external image content and including the view of the stadium captured therein into the cinemagraph as background. In the cinemagraph, the first person (first object) will then be shown running against the background of the stadium taken from the external image content. This is a well-fitting background for a running person as at least some users may perceive a comprehensible interrelation as regards content between the running first person and a stadium. In-cluding this background in the cinemagraph may thus at least in some cases create an interesting user experience.

According to an example embodiment, the external image content - and thus the static image content comprised thereby - does not comprise a second moving object. Said external image content may nevertheless be associated with a (second) motion pattern. For instance, it may have been stored together with a suitable motion pattern or a link to the respective external image content may be associated with the motion pattern, e.g. in a database. As an example, in the context of the scenario described above, the static image content showing the stadium may have been stored separately from the athlete but nevertheless be associated with the motion pattern of the athlete (stored together or linked thereto). Based on this principle, a library with static external image content and associated (second) motion patterns that indicate for which first objects including the static external image content into the cinemagraph may be suitable, for instance as background, may be created.

According to an example embodiment, creating the cinemagraph further comprises including further external image content thematically associated with the external image content into the cinemagraph. For instance, the further external image content may be thematically associated with a second object comprised by the external image content and moving according to the motion pattern associated with the external image content.

It may be assumed that further external image content thematically associated with the external image content may fit well to the first object as regards content due to the correspondence between the (first) motion pattern associated with the first object and the (second) motion pattern associated with the external image content and a match between the first object and the external image content possibly resulting therefrom. The further external image content may for instance at least for some users exhibit a comprehensible interrelation as regards content with the first object. A cinemagraph comprising the further external image content may therefore at least in some cases make a coherent impression to the user watching/looking at the cinemagraph.

The further external image content may be static image content, e.g. still image content, or it may be moving image content. The further external image content may be content not encompassed by the external image content. The further external content may thus be external to the external content.

According to an example embodiment, the further external image content is advertising content (static or moving). This embodiment may enable the integration of advertising content into cinemagraphs in a novel way.

To illustrate an example of the embodiment presently discussed and referring back to the scenario described above, the image sequence from which the cinemagraph is created may show a running first person (first object). The external image content may show an athlete (second object) running in a stadium. The external image content is thus associated with the topic sports. Apart from including the external image content (or at least parts thereof, e.g. the athlete or the stadium) into the cinemagraph, further external image content thematically associated with the included external image content may be included into the cinemagraph. Due to the external image content being associated with the topic sports, further external image content also associated with the topic sports may be considered as being thematically associated with the external image content and may therefore be included into the cinemagraph as well. An example of such further external image content may for instance be sports advertising content, e.g. the logo of a sporting goods manufacturer. In another scenario in which for instance a baby as a second object in the external image content is included into the cinemagraph, the logo of a diaper manufacturer may be included as further external image content.

The further external image content may be stored together with the external image content, e.g. in a database, for instance hosted by an apparatus performing an embodiment of the method according to the present invention or hosted on an external apparatus, e.g. a server. Alternatively, an indication where the further external image content may be found, e.g. a link to the further external image content, may be stored together with external image content or its associated motion pattern.

According to an example embodiment, creating the cinemagraph comprises receiving a user selection of the first object.

It may thus be possible for the user to decide which first object - and thus which (first) motion pattern - should serve as a basis for obtaining external image content associated with a corresponding (second) motion pattern. The user may for instance resort to a user interface of an apparatus that performs the example embodiment of the presently discussed method for making his selection.

According to an example embodiment wherein creating the cinemagraph comprises segmenting an image of the image sequence, thereby obtaining a plurality of image segments, and performing motion detection on the image segments, the first object may then for instance be selected by selecting an image segment that comprises image information on the first object.

Alternatively, the first object may be selected automatically, e.g. without a user input. It may for instance be selected by an example embodiment of an apparatus performing an example embodiment of the method according to the invention, e.g. by means of a software running on said apparatus.

According to an example embodiment, creating the cinemagraph comprises receiving a user selection of several first objects. For instance, for each of the selected first objects, external image content associated with a (second) motion pattern corresponding to a (first) motion pattern associated with the respective first object may be obtained and the external image content may be included into the cinemagraph. Alternatively, receiving a user selection of several first objects may comprise at first receiving a user selection of only one first object and then including external image content associated with a corresponding (second) motion pattern into the cinemagraph. Thereafter, the user may check if he likes the thus created cinemagraph. If not, it may be an option not to include the external image content presently included into the cinemagraph when a new cinemagraph is subsequently created. The newly created cinemagraph may for instance be based on the e the original image sequence. If, however, the user likes the created cinemagraph, the user may select a further first object if he would like to have further external image content included into the cinemagraph. Thus, a user selection of the further first object may be received. External image content associated with a (second) motion pattern corresponding to that associated with the further first object may then be included into the cinemagraph. These actions may be repeated until the user does not want to have any additional external image content included anymore.

According to an example embodiment, a plurality of external image content elements with a corresponding (second) motion pattern is obtained and a selected one of the plurality of external image content elements is included into the cinemagraph.

The term 'external image content element' is used here for distinguishing external image content that may be separately obtained and separately included into the cinemagraph, e.g. due to being separately stored in a database. The external image content elements of the plurality of external image content elements may for instance have been derived from different images or image sequences.

The presently discussed embodiment may allow the user to select the external image content element that he wants to have included into the cinemagraph. The method may comprise consecutively selecting and including into the cinemagraph at least two external image content elements. The user may thus try different external image content elements and check how he likes the cinemagraph that results from including the respective external image content element into the cinemagraph. Thus the best matching external image content element may be found. For selecting one of the plurality of external image content elements, all or some of the external image content elements of the plurality of external image content elements may be presented to the user, for instance by displaying them on a display, e.g. a touch screen, of an example embodiment of an apparatus performing an example embodiment of a method according to the present invention. By means of a user interface, e.g. the above-mentioned touch screen and a GUI, the user may then for instance swipe trough the presented external image content elements and perform his selection.

According to an example embodiment of, external image content elements of the plurality of external image content elements comprise a second object moving according to the (second) motion pattern associated with the respective external image content element that comprises the second object and a selected second object is included in the cinemagraph. This embodiment may comprise consecutively selecting and including into the cinemagraph at least two second objects.

According to another example embodiment, external image content elements of the plurality of external image content elements comprise static image content elements and a selected static image content element is included into the cinemagraph. This embodiment may comprise consecutively selecting and including into the cinemagraph at least two static image content elements.

According to an example embodiment, the external image content falls into an image content category specified by a user.

The user may also specify more than one image content category and the external image content included into the cinemagraph may then fall in at least one of the specified categories.

This example embodiment may comprise receiving a user selection of the image content category/image content categories, e.g. at an example embodiment of an apparatus performing an example embodiment of the invention.

Moreover, in the context of the presently discussed example embodiment, obtaining the external image content may comprise obtaining external image content falling into the specified category/categories. It may for instance comprise obtaining external image content falling into the specified category/categories and not obtaining external image content not falling into said category/categories. To enable obtaining external image content falling into a certain category, the external image content may be categorised, e.g. stored together with category information in a database. External image content elements falling into a specified image content category may be displayed, e.g. due to an apparatus performing the presently discussed example embodiment of a method according to the invention causing displaying thereof, and a user selection of an image content element to be included into the cinemagraph may be received at said apparatus.

By providing the user with the ability of selecting an image content category, e.g. vehicles or persons, the user may to a certain degree control which external image content is included into the cinemagraph according to his wishes.

According to an example embodiment, several cinemagraphs may be created from the image sequence, each cinemagraph having a different external image content element included therein.

This may allow a user to browse through the thus created cinemagraphs, e.g. by means of a gesture, for instance a swiping gesture, on a user interface such as a touch screen. A user selection of the mode how the external image content elements are included into the cinemagraph, e.g. if a second object present in an external image content element is added to the cinemagraph or merged with a first object, may have been received previously. A user selection of one or more of the obtained cinemagraphs that the user would like to keep, e.g. store and/or distribute, may also be received, e.g. at an apparatus performing the presently discussed example embodiment of a method according to the invention.

Other features of the present invention will become apparent from the following detailed description considered in conjunction with the accompanying drawings. However, the drawings are designed solely for purposes of illustration and not as a definition of the limits of the invention, for which reference should be made to the appended claims. The drawings are not drawn to scale and that they are merely intended to conceptually illustrate the structures and procedures described herein.

### BRIEF DESCRIPTION OF THE FIGURES

- Fig. 1: is a flow chart schematically illustrating a first embodiment of an example method according to the present invention;
- Fig. 2: is a schematic illustration of an example environment in which example embodiments of the present invention may be employed;
- Fig. 3: is a flow chart schematically illustrating a second embodiment of an example method according to the present invention;
- Fig. 4a: is a flow chart illustrating an example of a first implementation of a block of the flow chart of Fig. 3;
- Fig. 4b: is a representation of an example of an image of the image sequence from which the cinemagraph is created in the context of the embodiment explained on the basis of Fig. 4a;
- Fig. 4c: is a representation of an example of external image content that is included in the cinemagraph in the context of the embodiment explained on the basis of Fig. 4a;
- Fig. 4d: is a representation of an example of an image frame of a cinemagraph obtained in the context of the embodiment explained on the basis of Fig. 4a;
- Fig. 4e: is an example of an image frame obtained by including further external image content into the image frame of a Fig. 4d;
- Fig. 5a: is a flow chart illustrating an example of a second implementation of a block of the flow chart of Fig. 3;
- Fig. 5b: is a representation of an example of an image frame of a cinemagraph obtained in the context of the embodiment explained on the basis of Fig. 5a;
- Fig. 6a: is a flow chart illustrating an example of a third implementation of a block of the flow chart of Fig. 3;
- Fig. 6b: is a representation of an example of an image frame of a cinemagraph obtained in the context of the embodiment explained on the basis of Fig. 6a;
- Fig. 7a: is a flow chart illustrating an example of a fourth implementation of a block of the flow chart of Fig. 3;
- Fig. 7b: is a representation of an example of an image of the image sequence from which the cinemagraph is created in the context of the embodiment explained on the basis of Fig. 7a;
- Fig. 7c: is a representation of an example of an image frame comprising external image content that is included in the cinemagraph in the context of the embodiment explained on the basis of Fig. 7a;
- Fig. 7d: is a representation of an example of an image frame of a cinemagraph obtained in the context of the embodiment explained on the basis of Fig. 4a;
- Fig. 8a: is a representation of an example of an image sequence from which the cinemagraph is created in the context of an example of a fifth implementation of a block of flow chart of Fig. 3 similar to the third implementation;
- Fig. 8b: is an illustration of a representation an example of external image content that is included in the cinemagraph created from the image sequence illustrated in Fig. 8a;
- Fig. 8c: is a representation of an example of a cinemagraph created from the image sequence illustrated in Fig. 8a having external image content of Fig. 8b included therein;
- Fig. 9a: is a flow chart illustrating an example of a sixth implementation of a block of the flow chart of Fig. 3;
- Fig. 9b: is a representation of an example of a cinemagraph obtained in the context of the embodiment explained on the basis of Fig. 9a;
- Fig. 10: is a block diagram of an apparatus according to an example embodiment of the invention; and
- Fig. 11: is a schematic illustration of examples of tangible storage media according to an example embodiment of the present invention.

### DETAILED DESCRIPTION OF EXAMPLE EMBODIMENTS OF THE INVENTION

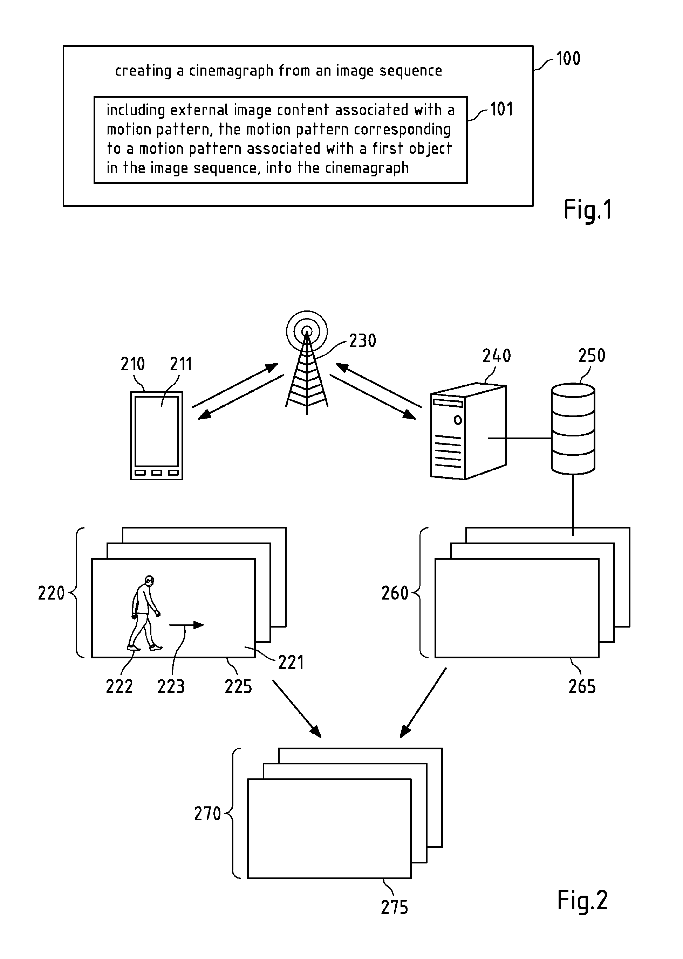

Fig. 1 is a flow chart schematically illustrating a first example embodiment of the method according to the present invention.

The method illustrated in the flow chart comprises creating a cinemagraph from an image sequence (block 100). Block 100 comprises sub-block 101. Block 101 comprises including external image content associated with a (second) motion pattern, the (second) motion pattern corresponding to a (first) motion pattern associated with a first object in the image sequence, into the cinemagraph.

By performing the actions of block 100 and thus also its sub-block 101, image content may be included into the cinemagraph that fits well to the image content of the image sequence, e.g. that exhibits a comprehensible interrelation with the image content of the image sequence as regards content at least for some users. This is due to the existence of the correspondence between the motion pattern associated with the first object of the image sequence and the motion pattern associated with the external image content. By including the external image content into the cinemagraph, a mashup of (at least parts of) the image sequence and the external image content may be created. As the motion pattern correspondence is the basis for deciding which external image content to include, the external image content may be chosen at least semi-automatically. Available user interfaces serving for the creation of cinemagraphs may therefore remain unchanged in many aspects and still make the capabilities of cinemagraph augmentation according to the described method accessible.

The obtained cinemagraph may then be presented to a user, stored and/or distributed, e.g. by sending it via e-mail, using it as a user logo, e.g. for an Internet forum, or uploading it to an Internet video portal

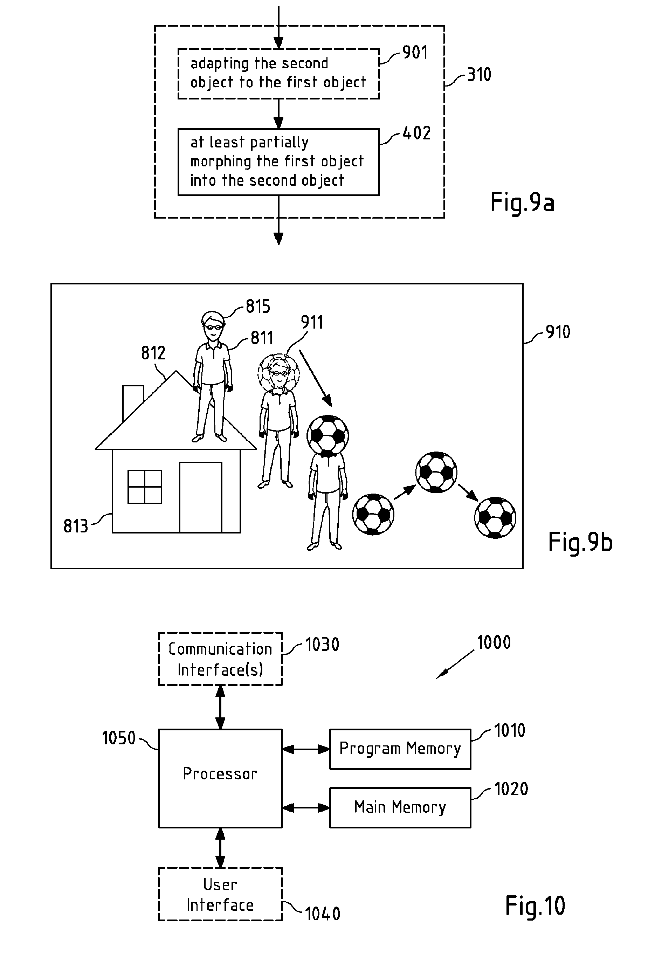

The method of the flow chart of Fig. 1 is performed by an apparatus, such as the apparatus that is depicted in Fig. 10 which will be explained later in this specification.

Fig. 2 is a schematic illustration of an example environment in which example embodiments of the present invention may be employed.

Fig. 2 shows a smartphone 210 comprising a camera. By means of smart phone 210 and by means of its camera, an image sequence 220 of a scene 221 may be acquired. The image sequence 220 may for instance be stored in the smartphone 210.The image sequence comprises several images, in this example image frames, 225. According to the present example, scene 221 inter alia shows a moving first object 222, in this case exemplified by person a walking in the direction indicated by arrow 223 in Fig. 2. Since first object 222 moves, it is associated with a (first) motion pattern. The (first) motion pattern associated with person 222 may be transmitted as a database query from smartphone 210 to sever 240 via, for example, a cellular communication network 230 symbolised in Fig. 2 by a base transceiver station.

Server 240 hosts a database 250. In database 250, external image content 260, e.g. a video comprising image frames 265, is stored. A (second) motion pattern is associated with external image content 260. It may for on instance have been precalculated, e.g. by server 240, and stored in database 250 or it may be extracted from external image content 260 when needed, e.g. by server 240. Sever 240 may retrieve external image content 260 and the (second) motion pattern associated therewith from database 250. Server 240 may then determine whether the motion pattern associated with first object 222 corresponds to the (second) motion pattern associated with external image content 260. If so, external image content 260 is transmitted to smartphone 210, smartphone 210 thus receiving external image content 260. Subsequently, a cinemagraph 270 comprising image frames 275, is created at smartphone 210 from image sequence 220 and external image content 260 is at least partially included therein. Cinemagraph 270 may be presented to user by displaying it on a touch screen 211 of smartphone 210.

Alternatively, smartphone 210 may transmit image sequence 220 to server 240 and server 240 may then create cinemagraph 270 from image sequence 220 including external image content 260 therein. Cinemagraph 270 may then be transmitted from server 240 to smartphone 210 via cellular communication network 230 for presenting it to a user.

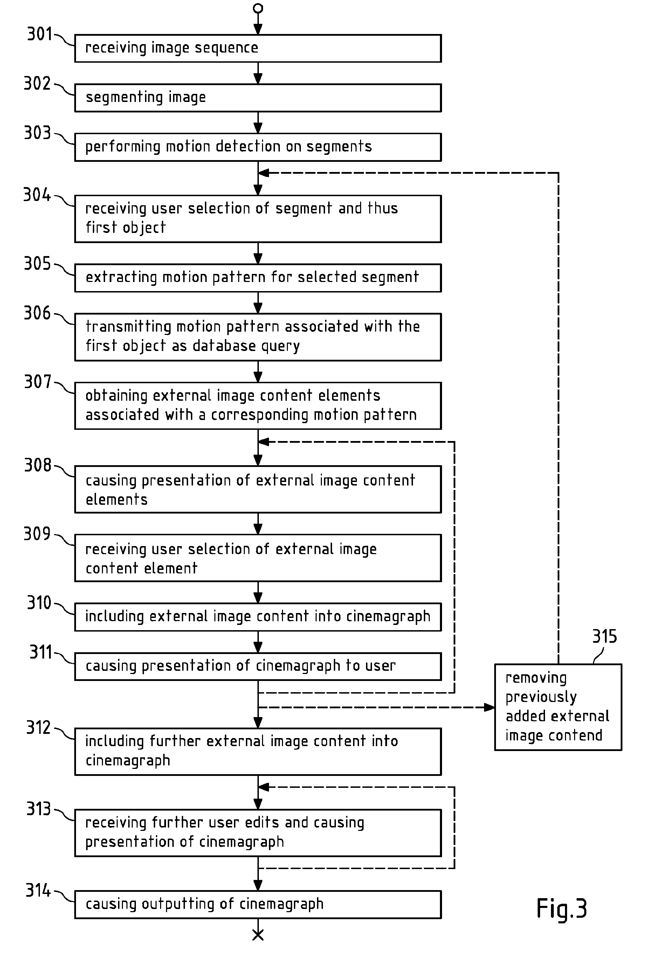

Fig. 3 is a flow chart schematically illustrating a second embodiment of an example method according to the present invention.

Block 301 comprises receiving an image sequence, e.g. captured by means of the camera of smartphone 210 of Fig. 2. As an alternative, the image sequence may for instance be obtained from an external source, e.g. the Internet, for instance from an Internet video portal, or, for example, from a storage device, e.g. a flash memory, within the apparatus that performs the method of Fig. 3 or connected thereto.

Block 302 comprises segmenting an image of the image sequence received in block 301. Thereby, a plurality of image segments is obtained.

Block 303 comprises performing motion detection on the image segments obtained in block 302, e.g. by smartphone 210. The motion detection performed in block 303 merely serves for detecting if there is any motion at all in a respective image segment.

, Block 304 comprises receiving a user selection, e.g. of a user of smartphone 210, of one of the segments for which it has been determined in block 303 that motion is present therein. For making the selection, the user may use a suitable user interface, e.g. touch screen 211 of smartphone 210.

The first object is a moving object present in the selected image segment. In order to obtain the (first) motion pattern associated with the image segment selected in block 304 and thus with the first object, block 305 comprises performing motion pattern extraction on the selected segment. It may be efficient to first detect in block 303 if there is any motion at all in the image segments of the plurality of image segments obtained in block 302. This is due to the fact that extracting a motion pattern is in many cases computationally more expensive than merely determining if there is any motion at all in an image segment. After having selected an image segment in block 304, motion pattern extraction may be performed on the selected segment and not on the other image segments of the plurality of image segments obtained in block 302. Therefore, the impact of motion pattern extraction on the overall computational effort may be less significant. However, as an alternative, the motion detection performed on the image segments in block 303 may also directly comprise extracting a motion pattern associated with each respective segment. Block 305 may then be omitted.

Block 306 comprises transmitting, e.g. from smartphone 210 to server 240, the (first) motion pattern associated with the segment selected in block 304 and thus associated with the first object as a database query, e,g. as a query for database 250 hosted on server 240 depicted in Fig. 2.

Once the query and thus the (first) motion pattern associated with the first object have been received at the apparatus hosting the database, e.g. server 240, a plurality of external image content elements, each associated with a (second) motion pattern corresponding to the (first) motion pattern associated with the first object, are retrieved from the database and transmitted back to the apparatus from which the database query originated, e.g. smartphone 210. Block 307 thus comprises obtaining the external image content elements and their associated (second) motion patterns at said apparatus. There, the external image content elements are presented to a user. This action is described by block 308. It may for instance comprise causing displaying of the external image content elements on touch screen 211 of smartphone 210 of Fig. 2. The external image content elements may fall into a category/categories selected by user. An according user selection may have been received by an apparatus performing the presently described method.

Block 309 comprises receiving a user selection, of one of the plurality of external image content elements. The user selection may for instance be received via touch screen 211 of smartphone 210. The user may for instance swipe through the presented external image content elements and perform his selection.

Block 310 comprises including the selected external image content element in a cinemagraph created based on the image sequence received in block 301. Block 311 comprises causing the presentation of the thus created cinemagraph to a user. This may for instance comprise causing displaying of the cinemagraph on touch screen 211 of smartphone 210.

Execution of the actions of blocks 308 to 311 may be repeated so that the different external image content elements are consecutively selected, included into the cinemagraph and presented to the user. Repeating these actions is terminated if an associated user instruction is received, e.g. via touch screen 211 of smartphone 210.The user may for instance give said instruction, if he is satisfied with the cinemagraph most recently presented to him according to block 311. The user may thus try different external image content elements and check how he likes the cinemagraph that results from including the respective external image content element into the cinemagraph. Thus, the image content element considered as the best match by the user may be found.

It is also an option to repeat execution of the actions of blocks 304-311. When executing the action of block 304, a user selection of another first object than the first object previously selected. at the last execution of the action of block 304 is then received, e.g. because a selection of a segment that does not comprise visual information pertaining to the previously selected first object but only to the newly selected first object is received. If the actions of blocks 304-311 are repeated, the method described with respect to Fig. 3 thus comprises subsequently receiving use selections of several first objects.

In the following execution of the actions of blocks 305-311, external image content associated with a (second) motion pattern corresponding to a (first) motion pattern associated with the newly selected first object is then obtained and included into the cinemagraph. If the user does not like both the external image content included into the cinemagraph in a previous execution of the actions of blocks 304-311 and the recently included external image content to be present in the cinemagraph, he may give a corresponding user instruction, e.g. via touch screen 211 of smartphone 210. Said instruction may then be received by the apparatus performing the presently described method. If said instruction is received, the action of optional block 315 may be executed before the repeated execution of the actions of blocks 304-311. Optional block 315 comprises removing previously included external image content from the cinemagraph. This may correspond to resorting to the original image sequence received in block 310 when recreating the cinemagraph.

As an alternative to receiving a user selection of an external image content element in block 309, including it into the cinemagraph (block 310), causing presentation thereof (block 311) and then repeating these actions if desired, several cinemagraphs may be directly created. Each cinemagraph may have a different external image content element included therein. Presentation of the cinemagraphs may then be initiated and a user selection of a cinemagraph the user would like to keep may be received, e.g. via touch screen 211.

Once the actions of blocks 304-311 are not repeated anymore, further external image content thematically associated with the external image content previously included into the cinemagraph is included in optional block 312. This may either be done automatically or it may be done or not done depending on a user selection received at the apparatus performing the presently discussed method.

Optional block 313 comprise receiving further user edits, e.g. via touch screen 211 of smartphone 210, and causing presentation of the edited cinemagraph to the user. Execution of the actions of block 313 may be repeated until a user instruction indicating that editing is completed is received at the apparatus performing the currently described method, e.g. via touch screen 211 (symbolised by dashed arrow).

Block 314 comprises causing outputting of the final cinemagraph. This may for instance comprise causing presentation of the cinemagraph to a user, e.g. causing displaying it on touch screen 211 of smartphone 210, and/or causing storing of it, e.g. on smartphone 210 and/or on a server, and/or causing distribution of the cinemagraph, e.g. by causing e-mail transmission thereof, causing usage thereof as a user logo, e.g. for an Internet forum, or causing uploading of it to an Internet video portal.

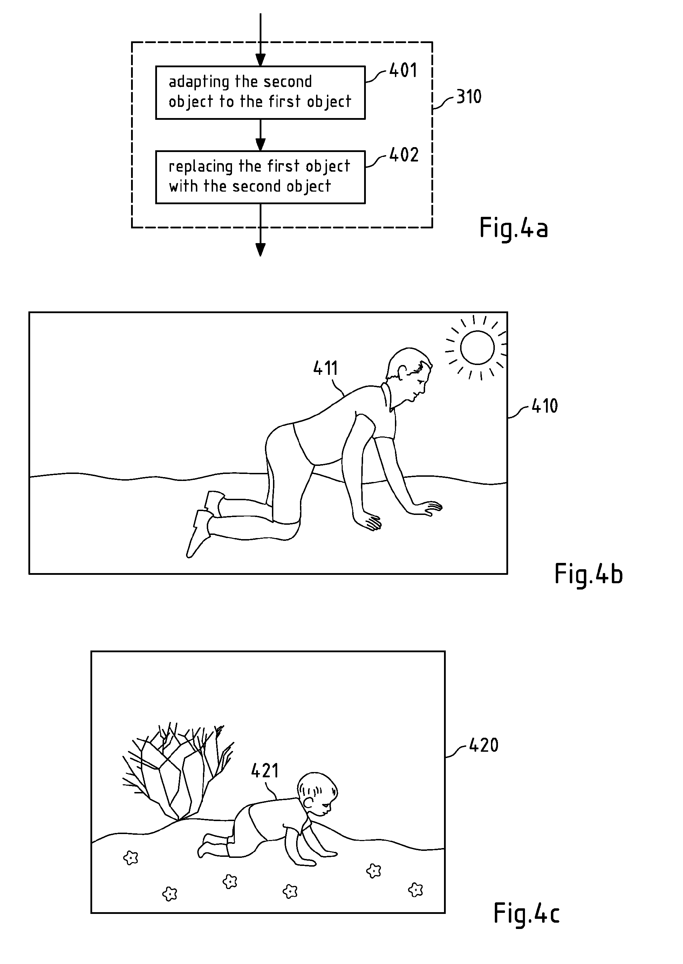

Fig. 4a is a flow chart illustrating an example of a first implementation of block 310 of the flow chart of Fig. 3.

In the context of the present example, it is assumed that the external image content included into the cinemagraph in block 310 comprises a second object moving according to the (second) motion pattern associated with the external image content.

Fig. 4b is a representation of an example of an image 410 of the image sequence from which the cinemagraph is created in the context of the embodiment explained on the basis of Fig. 4a.

Image 410 in Fig. 4a shows an adult person 411 in an outside environment. Image 410 is an image frame of an image sequence showing adult person 411 crawling on all fours. Adult person 411 thus moves according to a corresponding (first) motion pattern. In the presently discussed example, adult person 411 has been selected as a first object in block 304 of the flow chart of Fig. 3.

Fig. 4c is a representation of an example of external image content that is included in the cinemagraph in the context of the embodiment explained on the basis of Fig. 4a.

Image 420 shown in Fig. 4c is taken from an image sequence showing a baby 421 crawling in a similar manner as adult person 411 depicted in Fig. 4b. The image sequence of which image 420 forms part may be stored together with its associated (second) motion pattern in a database and/or said (second) motion pattern may be extracted from said image sequence upon request. Thus, when the (first) motion pattern associated with adult person 411 as a first object is used for retrieving external image content associated with a corresponding (second) motion pattern, the image sequence of which image 420 forms part is obtained. Crawling baby 421 is associated with a (second) motion pattern corresponding to that associated with the first object (adult person 411). Crawling baby 421 is thus a second object moving according to the (second) motion pattern associated with the image sequence of which image 420 forms part.

Crawling baby 421 in image 420 and in the whole image sequence of which image 421 forms part is significantly smaller than adult person 411 in image 410. Returning to the example flow chart of Fig. 4a, in block 401, the second object (baby 421) is therefore adapted to the first object (adult person 411). In this example, this comprises scaling the second object (baby 421), in this example the presentation thereof in the image sequence of which image 421 forms part, so that it (at least approximately) assumes the size of the first object (adult person 411).

In block 402, the first object (adult person 411) is replaced with the second object (baby 421), in this example with the scaled version thereof.

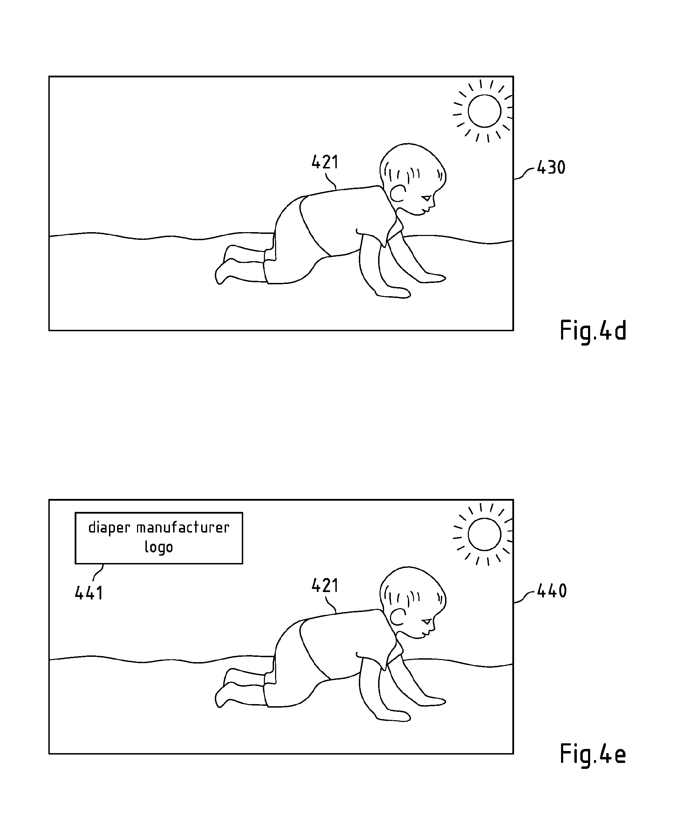

Fig. 4d is a representation of an example of an image frame 430 of a cinemagraph obtained in the context of the embodiment explained on the basis of Fig. 4a. As shown in Fig. 4d, the cinemagraph comprises the scaled second object (baby 421) instead of the first object (adult person 411). The cinemagraph has thus been augmented with the second object. Since the (second) motion pattern associated with the second object corresponds to the (first) motion pattern associated with the first object, the cinemagraph has been augmented with a second object performing a movement similar to the movement of the first object. A user watching/looking at the cinemagraph may at least in some cases notice the corresponding motion patterns of the first object and the second object. This may create an interesting and surprising user experience. Having adapted the second object (baby 421) to the first object (adult person 411) by scaling, the second object fits well into the cinemagraph. For instance, at least some users would not notice substantial differences between the size of scaled baby 421 and adult person 411. The adaption may have the effect that a user watching/looking at the cinemagraph cannot tell at the first glance that the first object did not form part of the image sequence from which the cinemagraph has been created but has been external image content.

If in block 312 further external image content is included into the cinemagraph that is thematically associated with the previously included external image content (baby 421 in the context of the present example) a cinemagraph comprising the image frame 440 shown in Fig. 4e may for instance be obtained. Image frame 440 is based on image frame 430 of Fig. 4d. However, the further external image content has been included therein. The further external image content is in this case the static logo 441 of a diaper manufacturer. It is thus advertising content. As this advertising content is included into the cinemagraph in a novel way, the user may perceive this way of integrating advertising content as funny and interesting.

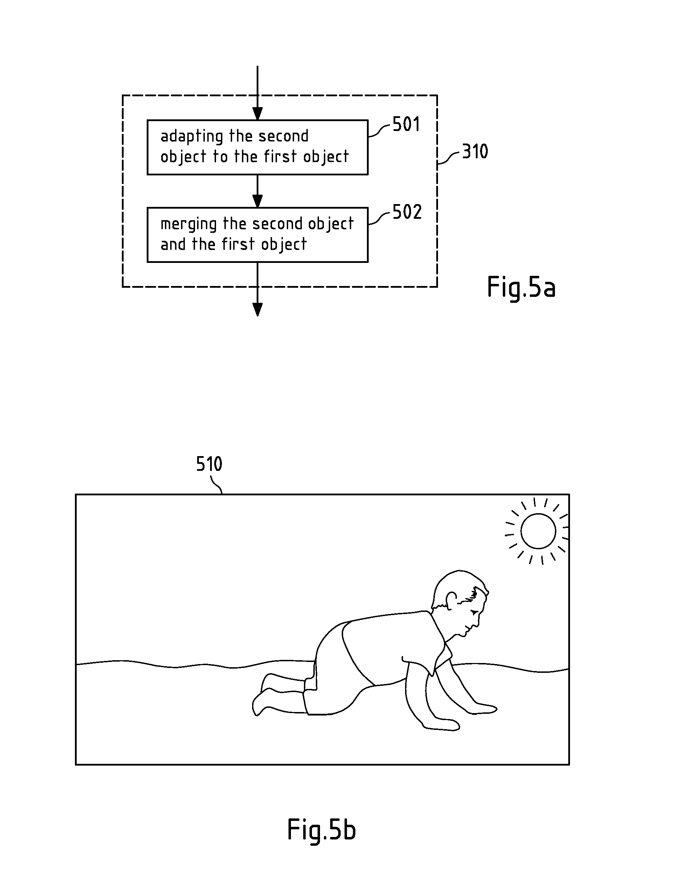

Fig. 5a is a flow chart illustrating an example of a second implementation of block 310 of the flow chart of Fig. 3.

Block 501 corresponds to block 401 of the flow chart of Fig. 4a. Block 502 comprises merging the first object (adult person 411) and the second object (baby 421) a and including the merged first and second objects into the cinemagraph. In this context, a user may select which parts of the first object (adult person 411) to maintain and which parts to replace by the corresponding parts of the second object (baby 421). A corresponding user selection may be received by the apparatus performing the presently discussed method.

Fig. 5b is a representation of an example of an image frame 510 of a cinemagraph obtained in the context of the embodiment explained on the basis of Fig. 5a. As can be seen in Fig. 5b, in the cinemagraph the head of adult person 411 of Fig. 4a has been maintained while its body has been replaced with the scaled body of baby 421. This may at least in some cases create a surprising effect for user watching/ looking at the cinemagraph.

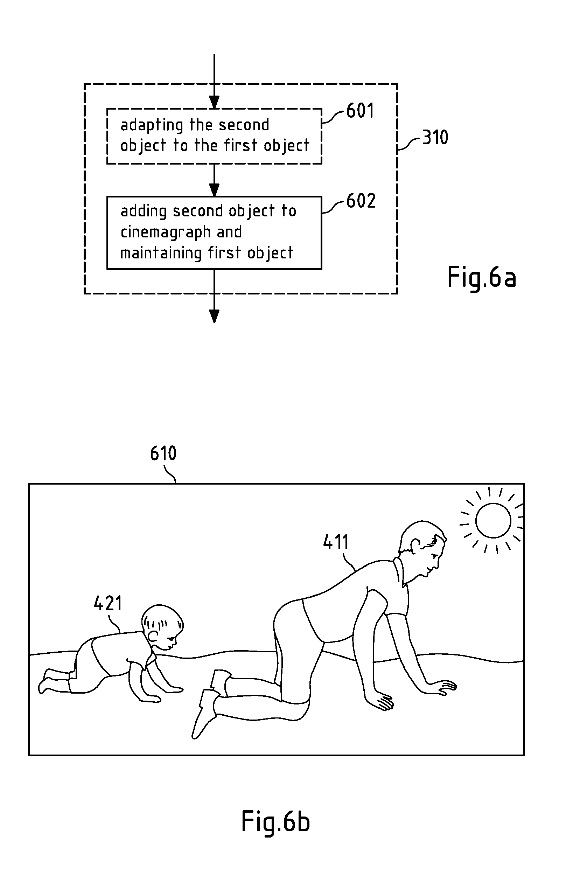

Fig. 6a is a flow chart illustrating an example of a third implementation of block 310 of the flow chart of Fig. 3. Block 602 comprises adding the second object (baby 421 of Fig. 4b) to the cinemagraph and maintaining adult person 411.

Fig. 6b is a representation of an example of an image frame 610 of a cinemagraph obtained in the context of the embodiment explained on the basis of Fig. 6a. As can be seen in Fig. 6b, baby 421 has not been scaled. However, it would also be possible to adapt the size of baby 421 to the size of adult person 411 in an optional block 601.

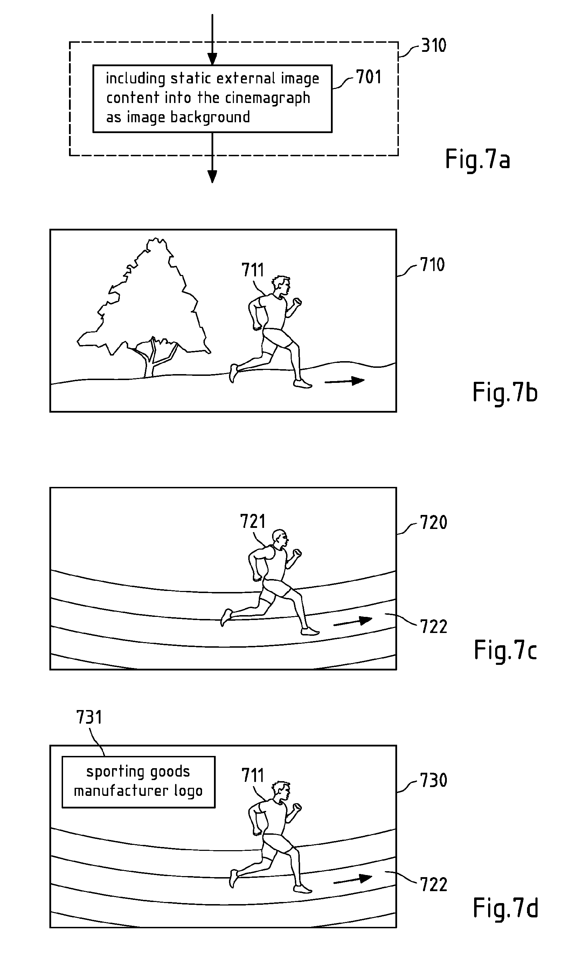

Fig. 7a is a flow chart illustrating an example of a fourth implementation of block 310 of the flow chart of Fig. 3.

Fig. 7b is a representation of an example of an image 710 of the image sequence from which the cinemagraph is created in the context of the embodiment explained on the basis of Fig. 7a. Image 710 in Fig. 7b shows a person 711 running in a forest. In the presently discussed example, person 711 has been selected as a first object in block 304 of the flow chart of Fig. 3.

Image 720 shown in Fig. 7c is taken from an image sequence showing an athlete 721 running on a running track 722 of a stadium. Running track 722 forms the background of image frame 720. Running track 722 is static external image content. Athlete 721 - and thus the image sequence of which image frame 720 forms part - is associated with a (second) motion pattern corresponding to that associated with person 711. Therefore, the image sequence of which image frame 720 forms part is obtained as external image content in block 307 of the flow chart of Fig. 3. The external image content thus comprises a second object (athlete 721) moving according to the (second) motion pattern associated with the external image content and the static image content is the background 722 against which second object 721 moves. According to this example, it may be attained that based on the (second) motion pattern associated with the second object (athlete 721) that moves according to this (second) motion pattern (said (second) motion pattern thus also being associated with the external image content, in this example the image sequence of which image frame 720 forms part), it may be decided that the background present in the external image content is thematically linked to the first object (person 711) and its movement due to the correspondence of the motion patterns. It may thus be well-fitting as regards content to augment the cinemagraph with this background by including it into the cinemagraph as background. For instance, at least some users may perceive a comprehensible interrelation as regards content between person 711 and the background present in the external image content.

However, the external image content does not have to be an image sequence comprising running athlete 721 as a moving second object and running track 722 as static image content. The external image content may, for instance, instead be a single static image showing running track 722. It may nevertheless be associated with the (second) motion pattern. For instance, the visual information pertaining to running track 722 may have been extracted from an image sequence showing both running track 722 and running athlete 721, e.g. by server 240 of Fig. 2. Said visual information may then have been stored together with the (second) motion pattern associated with athlete 721 or a said (second) motion pattern may otherwise point to the image information pertaining to running track 722, e.g. by means of a link thereto.

Returning to the flow chart of Fig. 7a, block 701 comprises including running track 722 as background into the cinemagraph created from the image sequence of which image frame 710 forms part. This comprises that the visual information pertaining to running track 722 is extracted from image 720. If in block 312 further external image content that is thematically associated with the previously included external image content (running track 722 in the context of the present example) is included into the cinemagraph, a cinemagraph comprising image frame 730 shown in Fig. 7d may be obtained. The further external image content is in this case static logo 731 of a sporting goods manufacturer and thus advertising content.

By including running track 722 in the created cinemagraph, it will appear to a user watching/ looking at the cinemagraph that person 711 runs on running track 722 instead of running in a forest as in the underlying image. This may at least in some cases create an interesting user experience. In the final cinemagraph, for instance, only the legs of person 711 may be animated so that person 411 looks like not actually moving forward. The remaining image content of the cinemagraph may be still image content.

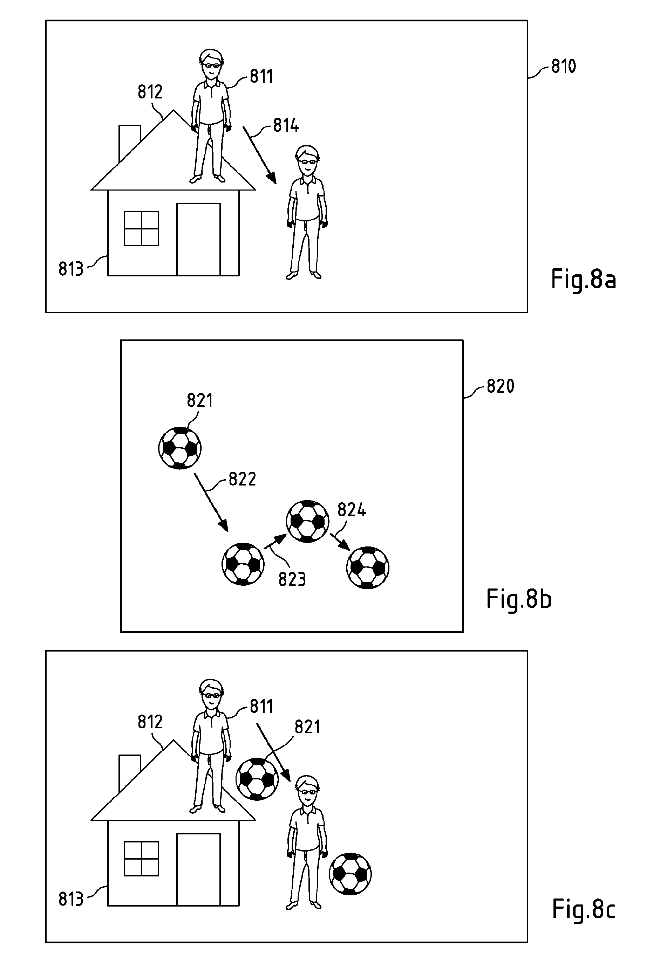

With respect to Fig. 8a to Fig. 8c, an example of a fifth implementation of block 310 of the flow chart of Fig. 3 is explained. It basically corresponds to the example of a third implementation previously explained with respect to Fig. 6a and Fig. 6b. Including the second object into the cinemagraph thus comprises adding the second object to the cinemagraph while maintaining the first object. However, according to the example presently discussed, the image sequence employed for creating the cinemagraph and the external image content are different.

Fig. 8a is a representation of an example of the image sequence 810 from which the cinemagraph is created in the context of the presently discussed example. As illustrated in Fig. 8a, image sequence 810 shows a person 811 (first object) jumping from the roof 812 of a house 813 as indicated by arrow 814.

Fig. 8b illustrates an example of external image content 820 that is included in the cinemagraph in the context of the currently discussed embodiment. As illustrated in Fig. 8b, external image content 820 shows a ball 821 (second object) performing a downward motion and then bouncing off the ground. This (second) motion pattern is visualised by three arrows 822, 823 and 824 in Fig. 8b. It thus describes more than one motion. As shown, the (first) motion pattern associated with person 811 in Fig. 8a corresponds only partially to that associated with ball 821 in Fig. 8b. While there is a correspondence of the (first) motion pattern associated with person 811 and the downward motion of ball 821 indicated by arrow 822, there is no element in the (first) motion pattern associated with person 811 that corresponds to the bouncing motion of ball 821 indicated by arrows 823 and 824.

As noted above, according to the presently discussed example, including the second object (ball 821) into the cinemagraph comprises adding the second object to the cinemagraph while maintaining the first object (person 811). Furthermore, in this example the second object (ball 821) is only included into the cinemagraph as long as there is a correspondence of the motion patterns associated with the first object (person 811) and the second object (ball 821). Hence, only the presentation of ball 821 in image frames of external image content 820 that show ball 821 performing the downward motion indicated by arrow 822 are included into the cinemagraph. The presentation of ball 821 in image frames of external image content 820 that show ball 821 performing the bouncing motion indicated by arrows 823 and 824 is not included. In other words, only including the second object (ball 821) into the cinemagraph is limited to presentations of the second object moving according to the corresponding parts of the motion patterns.

Fig. 8c is a representation of an example of a cinemagraph 830 obtained in the context of the presently discussed embodiment. Due to the second object (ball 821) only being included into cinemagraph 830 as long as there is a correspondence of the motion patterns associated with the first object (person 811) and the second object (ball 821), the integration of ball 821 into cinemagraph 830 may at least in some cases appear harmonious to a user watching/looking at cinemagraph 830.

Fig. 9a is a flow chart illustrating an example of a sixth implementation of block 310 of the flow chart of Fig. 3. Optional block 901 comprises adapting the second object to the first object. In block 902, the external image content is included into the cinemagraph. This comprises at least partially morphing the first object into the second object.

Again, image sequence 810 represented by Fig. 8a serves as the basis for creating the cinemagraph in the context of the presently discussed example. It is also again resorted to external image content 820.

In contrast to the embodiment discussed previously with respect to Fig. 8a to Fig. 8c, this time including the second object (ball 821) into the cinemagraph extends beyond the correspondence of the motion patterns associated with the first object (person 811) and the second object (ball 821). Hence, not only the presentation of ball 821 in image frames of external image content 820 that show ball 821 performing the downward motion indicated by arrow 822 are included into the cinemagraph. The presentation of ball 821 in image frames of external image content 820 that show ball 821 performing the bouncing motion indicated by arrows 823 and 824 is also included.

Fig. 9b is a representation of an example of a cinemagraph 910 obtained in the context of the presently discussed embodiment. As can be seen in Fig. 9b, in cinemagraph 910 the head 815 of person 811 (first object) morphs into ball 821 (second object). Thus, the first object morphs partially into the second object. If necessary, the presentation of ball 821 may have been scaled in optional block 901 of the flow chart of Fig. 9a so that it approximately assumes the size of head 815 of person 811. The presentation of ball 821 (second object) may thus be adapted to the person 811 (first object).

Morphing head 815 of person 811 into ball 821 may yield an image frame of cinemagraph 815 comprising visual information on person 811 including head 815 but not on ball 821. This may for instance be the case for an image frame showing person 811 still standing on roof 812 before jumping down. In a subsequent frame of cinemagraph 910, a faded version of head 815 and a faded version of ball 821 may be superimposed. The hybrid of faded head 815 and faded ball 821 is denoted by reference numeral 911 in Fig. 9b. Later image frames of cinemagraph 910 show an unfaded version of ball 821. Head 811 is not visible anymore.

As not only the presentation of ball 821 in image frames of external image content 820 that show ball 821 performing the downward motion indicated by arrow 822 is included into cinemagraph 910 but also in image frames of external image content 820 that show ball 821 performing the bouncing motion indicated by arrows 823 and 824 is included, it may at least in some cases seem to a user watching/looking at cinemagraph 910 that head 815 of person 811 morphs into ball 821 and then falls to the ground and bounces away. Cinemagraph 910 may therefore provide for some users a enjoyable user experience.

Fig. 10 shows a block diagram of an apparatus 1000 according to an example embodiment. The apparatus 1000 may represent an example embodiment of the first or second apparatus according to the invention.

Apparatus 1000 may for instance be or form a part of (e.g. as a module such as a chip or a chipset) a mobile terminal, e.g. smartphone 210 of Fig. 2, or of a server, e.g. server 240 of Fig. 2. Non-limiting examples of a mobile terminal are a cellular phone, a personal digital assistant, a laptop computer, a tablet computer or a multimedia player.

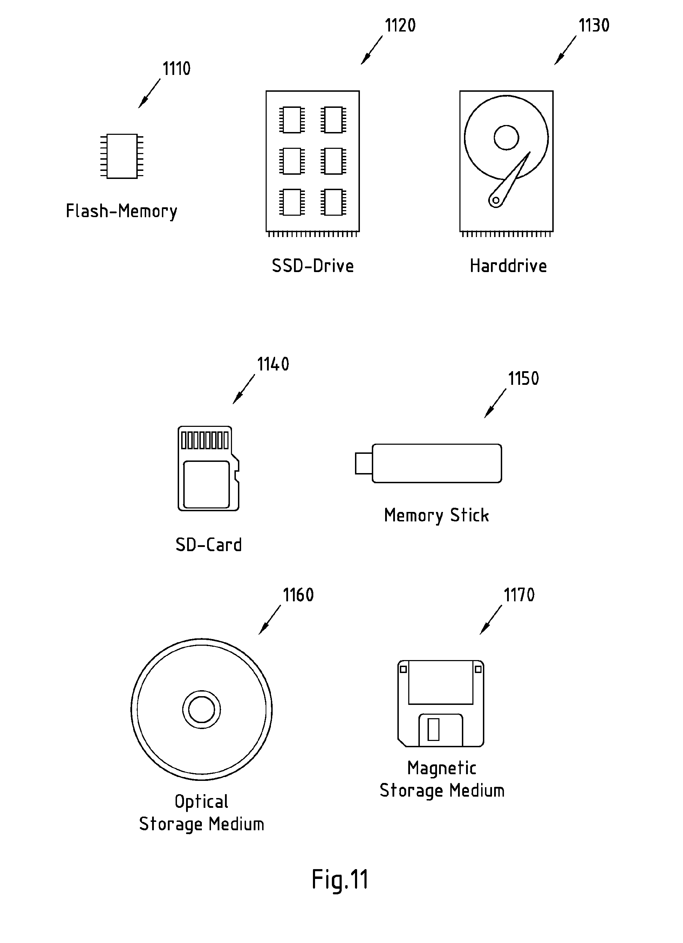

Apparatus 1000 comprises a processor 1050. Processor 1050 may represent a single processor or two or more processors, which are for instance at least partially coupled, for instance via a bus. Processor 1050 executes a program code stored in program memory 1010 (for instance program code causing apparatus 1000 to perfonn one or more example embodiment of a method according to the invention (as for instance further described above with reference to the flow charts of Figs. 1, 3, 4a, 5a, 6a, 7a and 9a), when executed on processor 1050), and interfaces with a main memory 1020. Some or all of memories 1010 and 1020 may also be included into processor 1050. One of or both of memories 1010 and 1020 may be fixedly connected to processor 1050 or at least partially removable from processor 1050, for instance in the form of a memory card or stick. Program memory 1010 may for instance be a non-volatile memory. Examples of such tangible, non-volatile storage media will be presented with respect to Fig. 11 below. It may for instance be a FLASH memory (or a part thereof), any of a ROM, PROM, EPROM and EEPROM memory (or a part thereof) or a hard disc (or a part thereof), to name but a few examples. Program memory 1010 may also comprise an operating system for processor 1050. Program memory 1010 may for instance comprise a first memory portion that is fixedly installed in apparatus 1000, and a second memory portion that is removable from apparatus 1000, for instance in the form of a removable SD memory card. One or more image sequences or image frames, external image content or cinemagraphs that are processed or created by apparatus 1000 when executing an example embodiment of the method of the present invention may for instance be stored in program memory 1010. Main memory 1020 may for instance be a volatile memory. It may for instance be a RAM or DRAM memory, to give but a few non-limiting examples. It may for instance be used as a working memory for processor 1050 when executing an operating system and/or programs.

Processor 1050 may further control a communication interface 1030 (or several communication interfaces) configured to receive and transmit radio signals. As communication interface 1030 is an optional component of apparatus 1000, it is shown with dashed outlines. For instance, in the context of the scenario illustrated in Fig. 2, communication interface 1030 may enable communication of apparatus 1000 via cellular communication network 230, e.g. for transmitting or receiving a motion pattern and/or an image sequence and/or external image content and/or a created cinemagraph including such image content. Communication interface 1030 may thus for instance comprise circuitry such as modulators, filters, mixers, switches and/or one or more antennas to allow transmission and/or reception of signals. Communication interface 1030 may for instance be configured to allow communication in a 2G/3G/4G cellular communication network. However, communication interface 1030 may also be another type of wireless communication interface instead. It may for instance enable communication with a WLAN network. As another example, communication interface 1030 may also provide wire-bound communication capabilities.

Processor 1050 may further control an optional user interface 1040 configured to present information to a user of apparatus 1000 and/or to receive information from such a user. If apparatus 1000 for instance forms part of a mobile terminal, user interface 1040 may for instance be the standard user interface via which a user of apparatus 1000 controls the functionality thereof, such as making phone calls, browsing the Internet, etc. If apparatus 1000 for instance forms part of Smartphone 210 of Fig. 2, the user interface may for instance be touch screen 211.

The components 1010-1040 of apparatus 1000 may for instance be connected with processor 1050 by means of one or more serial and/or parallel busses.

It is to be noted that the circuitry formed by the components of apparatus 1000 may be implemented in hardware alone, partially in hardware and in software, or in software only, as further described at the end of this specification.

Enabling apparatus 1000 to perform an action described above may comprises that corresponding program code is stored in memory 1010 and that the program code and the memory are configured to, with processor 1050, cause apparatus 1000 to perform the action. Equally well, enabling apparatus 1000 to perform an action described above may comprise that apparatus 1000 comprises according means for performing this action. For instance, processor 1050 together with memory 1010 and the program code stored there and together with memory 1020 may be considered as means for creating a cinemagraph from an image sequence, wherein creating the cinemagraph comprises including external image content associated with a (second) motion pattern, the (second) motion pattern corresponding to a (first) motion pattern associated with a first object in the image sequence, into the cinemagraph if the program code stored in memory 1010 is selected accordingly.

When apparatus 1000 performs an example embodiment of a method according to the invention (e.g. a method as further described above with reference to the flow charts of Figs. 1, 3, 4a, 5a, 6a, 7a and 9a) the apparatus may thus be considered as an example embodiment of the first or second apparatus according to the invention, respectively. Likewise, the program memory 1010 of apparatus 1000, which may be a tangible, non-transitory, non-volatile storage medium, may be considered as an example embodiment of a computer readable storage medium according to the invention if corresponding computer program code (for instance a set of instructions) is stored therein.

Fig. 11 schematically illustrates examples of tangible storage media according to an example embodiment of the present invention that may for instance be used to implement program memory 1010 of Fig. 10. Fig. 11 displays a flash memory 1110, which may for instance be soldered or bonded to a printed circuit board, a solid-state drive 1120 comprising a plurality of memory chips (e.g. Flash memory chips), a magnetic hard drive 1130, a Secure Digital (SD) card 1140, a Universal Serial Bus (USB) memory stick 1150, an optical storage medium 1160 (such as for instance a CD-ROM or DVD) and a magnetic storage medium 1170.

Any presented connection in the described example embodiments is an operational coupling of the involved components. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to portions of processor(s)/ software (including digital signal processor(s)), software, and memory(ies) that work together to cause an apparatus, such as a mobile phone or a server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or portion of a processor and its (or their) accompanying software and/or firmware. The term 'circuitry' also covers, for example, a baseband integrated circuit or applications processor integrated circuit for a mobile phone.

Any of the processors mentioned in this text (not limited to processors 1050 of Fig. 10) could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' encompass specialized circuits such as FPGAs, ASICs, signal processing devices, and other devices.

All presented embodiments are only examples. Any feature presented for a certain embodiment may be used with any aspect of the invention on its own or in combination with any feature presented for the same or another example embodiment and/or in combination with any other feature not mentioned. Any feature presented for an example embodiment in a certain category may also be used in a corresponding manner in an example embodiment of any other category.

## Claims

1. A method performed by an apparatus, the method comprising creating a cinemagraph from an image sequence, wherein creating the cinemagraph comprises including external image content associated with a motion pattern, the motion pattern corresponding to a motion pattern associated with a first object in the image sequence, into the cinemagraph.

2. The method according to claim 1, wherein the external image content comprises a second object moving according to the motion pattern associated with the external image content.

3. The method according to claim 2, wherein creating the cinemagraph further comprises adapting the second object to the first object.

4. The method according to any of claims 2-3, wherein including the external image content into the cinemagraph comprises adding the second object to the cinemagraph while maintaining the first object.

5. The method according to any of claims 2-3, wherein including the external image content into the cinemagraph comprises replacing the first object with the second object.

6. The method according to any of claims 2-3, wherein including the external image content into the cinemagraph comprises merging the first object and the second object.

7. The method according to any of claims 2-3, wherein including the external image content into the cinemagraph comprises at least partially morphing the first object into the second object.

8. The method according to any of claims 2-7, wherein the motion pattern associated with the first object and the motion pattern associated with the second object correspond only partially and the second object is only included into the cinemagraph as long as there is a correspondence of the motion patterns.

9. The method according to any of claims 2-7, wherein the motion pattern associated with the first object and the motion pattern associated with the second object correspond only partially and including the second object into the cinemagraph extends beyond a correspondence of the motion patterns.

10. The method according to any of claims 1-9, wherein the external image content comprises static image content and the static image content is included into the cinemagraph.

11. The method according to any of claims 1-10, wherein creating the cinemagraph further comprises including further external image content thematically associated with the external image content into the cinemagraph.

12. The method according to any of claims 1-11, wherein creating the cinemagraph comprises receiving a user selection of the first object.

13. The method according to any of claims 1-12, wherein a plurality of external image content elements with a corresponding motion pattern is obtained and a selected one of the plurality of external image content elements is included into the cinemagraph.

14. An apparatus comprising means for realizing the method of any of the claims 1-13.

15. A computer program code, the computer program code when executed by a processor causing an apparatus to perform the actions of the method of any of claims 1-13.
